Europäisches Patentamt

European Patent Office

Office européen des brevets

Publication number: **0 287 834**
**A1**

## EUROPEAN PATENT APPLICATION

Application number: 88104746.8

Date of filing: 24.03.88

Int. Cl.⁴ **G11B 5/712 , G11B 5/82 , G11B 5/72**

Priority: 26.03.87 JP 73086/87

Date of publication of application:
26.10.88 Bulletin 88/43

Designated Contracting States:
BE DE FR GB IT NL

Applicant: **KANEGAFUCHI KAGAKU KOGYO KABUSHIKI KAISHA**
2-4 Nakanoshima 3-chome
Kita-ku Osaka-shi Osaka-fu(JP)

Inventor: **Saiki, Koji**
Lune Toyanaka No. 121 4-6-1, Kitajo-cho
Toyanaka-shi Osaka-fu(JP)

Representative: **Vossius & Partner**
Siebertstrasse 4 P.O. Box 86 07 67
D-8000 München 86(DE)

**Perpendicular magnetic recording media.**

The present invention provides a perpendicular magnetic recording medium having a centerline average roughness (Ra) of 0.020 $\mu$m or less and a stiffness of from $5 \times 10^{-3}$ to $20 \times 10^{-3}$ kgf• mm. According to the present invention, the spacing between the head and the medium can be minimized so that even a high density range recording of 100 kFRPI or more can be attained with the medium of the invention.

FIG. 1

# PERPENDICULAR MAGNETIC RECORDING MEDIA

The present invention relates to perpendicular magnetic recording media capable of effecting a high density recording. More specifically, it relates to perpendicular magnetic recording media which are especially suitable for flexible discs.

A perpendicular magnetic recording system has been proposed as a system capable of effecting a megnetic recording of an extremely high density, and since then, numerous energetic studies on the said system have been carried out. In particular, a system composed of a perpendicular magnetic anisotropic medium having a soft magnetic layer as an under layer and a single pole type perpendicular head can effectively be used for high density recording, and a recording of about 100 kFRPI (flux reversal per inch) has become possible with the said system, up to the present. In such technique, a medium having the structure as mentioned below is used. As a substrate, an organic polymer film, for example, polyesters, polyimides, etc., having a thickness of from 50 to 75 $\mu$m is used. In a medium having a bi-layered film structure, an alloy with a high magnetic permeability, for example, Permalloys and amorphous alloys such as various kinds of Co-Zr alloys, etc., is used as an under layer, and alloys having an initial permeability of 1000 or more and a saturation magnetization of 500 emu/cc or more are preferred. The thickness of the soft magnetic layer is, although varying in accordance with the value of the saturation magnetization, generally about 0.5 $\mu$m or so. As the perpendicular magnetic anisotropic film, a Co-alloy is used which includes a Co-Cr alloy as a typical example. The alloy has a saturation magnetization of from 400 to 800 emu/cc, a coercive force of from 400 to 1000 0e and a thickness of from 0. 1 to 0.2 $\mu$m. Using a perpendicular magnetic recording medium having such structure, a recording density of 100 kFRPI can be attained. This value corresponds to 10 times of the recording density of a conventional coated type recording medium which can attain a recording density of about 10 kFRPI or so, and therefore, it can be said that the perpendicular magnetic recording medium of this type is one capable of effecting an extremely high density recording. However, realization of a higher density recording is being desired in this technical field.

In a high density recording of 100 kFRPI or more, an extremely close contact between the head and the medium is required, and the spacing between the head and the medium must be 0.050 $\mu$m or less. If not, the reproducing output power would lower. However, such fine spacing could not be realized up to the present, and therefore, a high density recording of 100 kFRPI or more could not be attained up to the present.

The object of the present invention is to overcome the problem that the high recording density of 100 kFRPI or more cannot be attained because of the impossibility of making the spacing sufficiently small, as mentioned above, and to make the spacing sufficiently small to be 0.040 $\mu$m or less thereby to provide a recording medium capable of realizing a recording density of 100 kFRPI or more, especially a magnetic recording medium suitable for a flexible disc.

Other objects and merits of the present invention will be apparant to one skilled in the art from the detailed description to follow hereunder.

As a result of earnest studies, the present inventor has found that the above-mentioned object can be attained by specifically defining the surface flatness and the stiffness (bending rigidity) of the medium to fall within a specific range and thus have completed the present invention.

Fig. 1 shows a relation between the recording density and the reproducing output power of a bi-layered perpendicular magnetic recording medium.

Fig. 2 shows the principle for measurement of the stiffness of a medium.

The subject matter of the present invention resides in a perpendicular magnetic recording medium having a centerline average roughness (Ra) of 0.020 $\mu$m or less and a stiffness of from $5 \times 10^{-3}$ to $20 \times 10^{-3}$ kgf• mm.

In order to reduce the spacing, the surface of the medium must be extremely flat. In particular, if a high recording density of 100 kFRPI or more is to be realized, like the present invention, a far finer flatness is required for the medium as compared with the dimension of the head, for example, in a degree falling within the range of from 1 to 10 $\mu$m. In such range, the surface of the medium could no more be brought into contact with the top of the head even though the head is pressed into the medium, and therefore, the surface of the medium must naturally be flat microscopically. The flatness is measured, for example, on the basis of JIS-B0601 (1982). In the centerline average roughness (Ra), the flatness is required to be 0.020 $\mu$m or less, preferably 0.010 $\mu$m or less. Needless to say, the centerline maximum roughness (Rmax) is also required to be small.

In order to obtain a medium having such surface flatness, the surface flatness of the base film for the medium must be 0. 020 $\mu$m or less as (Ra). When a film having such surface flatness is coated with a metal magnetic film having a thickness of from 0.1 to 1 μm by sputtering or evaporation deposition under pertinent condition, the surface flatness is further improved to be, for example, 0.010 μm or less as (Ra).

A film with such excellent surface flatness, for example, a polyimide film with a high surface flatness can be prepared by the method described in Japanese Patent unexamined publication No. 122921 83.

Specifically, in the process of formation of a polyimide film, a diamine component and a tetracarboxylic acid dianhydride are primarily reacted to give a poly (amide-acid), and the step of filmation and imidation from the poly (amide-acid) solution is important. The poly (amide-acid) solution is spread over a substrate with an excellent surface flatness to be filmed thereon. Accordingly, although natural, the support is required to have an extremely excellent surface flatness of 0. 010 μm or less as (Ra). Subsequently, the thus spread solution is left as such for a determined period of time until hardening, whereby a film having an extremely excellent surface flatness can be obtained through the self-smoothening ability by fluidization of the coated liquid film. As a means for keeping a determined period of the hardening time, a necessary period of time is ensured from the liquid spreading over the substrate to the initiation of heating the substrate, for the case of carrying out the imidation under heat; or alternatively, a catalyst which is inactive under a low temperature but can be active only under a high temperature is selectively used, for the case of carrying out the imidation in the presence of a hardening catalyst, whereby the hardening can efficiently be attained. The film thus prepared has an extremely excellent surface flatness of from 0.010 to 0.020 μm as (Ra) or from 0. 030 to 0.080 μm as (Rmax), the said values being measured under the conditions of a needle top radius of curvature of 2 μm, a cut off of 0.8 mm and a measuring length of 2.5 mm. When the film is caoted with a metal magnetic layer having a thickness of from 0.1 to 1 μm by sputtering (or evaporation deposition) under pertinent conditions, the surface flatness is further improved to be finally from 0.005 to 0.010 μm as (Ra) and from 0. 015 to 0.040 μm as (Rmax).

However, even when a medium having such an excellent surface flatness is used, the spacing between the head and the medium is not always made small. Under the situation, the present inventor has paid attention to the flexibility of the medium as another factor for determining the spacing.

Regarding the flexibility of a medium, in general, if the medium is too stiff, the contact between the head and the medium is bad so that a stable output could not be obtained; but on the contrary, it too soft, it is naturally difficult to stably rotate the disc. In order to obtain an optimal flexibility (stiffness) for the medium, the present inventor earnestly studied and as a result has found the optimum value of the stiffness for the medium. According to the investigation by the present inventor, the spacing between the head and the medium may be 0.040 μm or less, when the centerline average roughness (Ra) of the medium is 0.020 μm or less, preferably 0.010 μm or less, and the stiffness thereof is from $5 \times 10^{-3}$ to $20 \times 10^{-3}$ kgf• mm, preferably from $10 \times 10^{-3}$ to $17 \times 10^{-3}$ kgf• mm. For the measurement of the spacing between the head and the medium, for example, the method by S. Yamamoto et al., described in Technical Report of the Institute of Electronics, Information and Communication Engineers of Japan, MR Vol. 86, No. 16, pages 41-47 (1986), may be referred to.

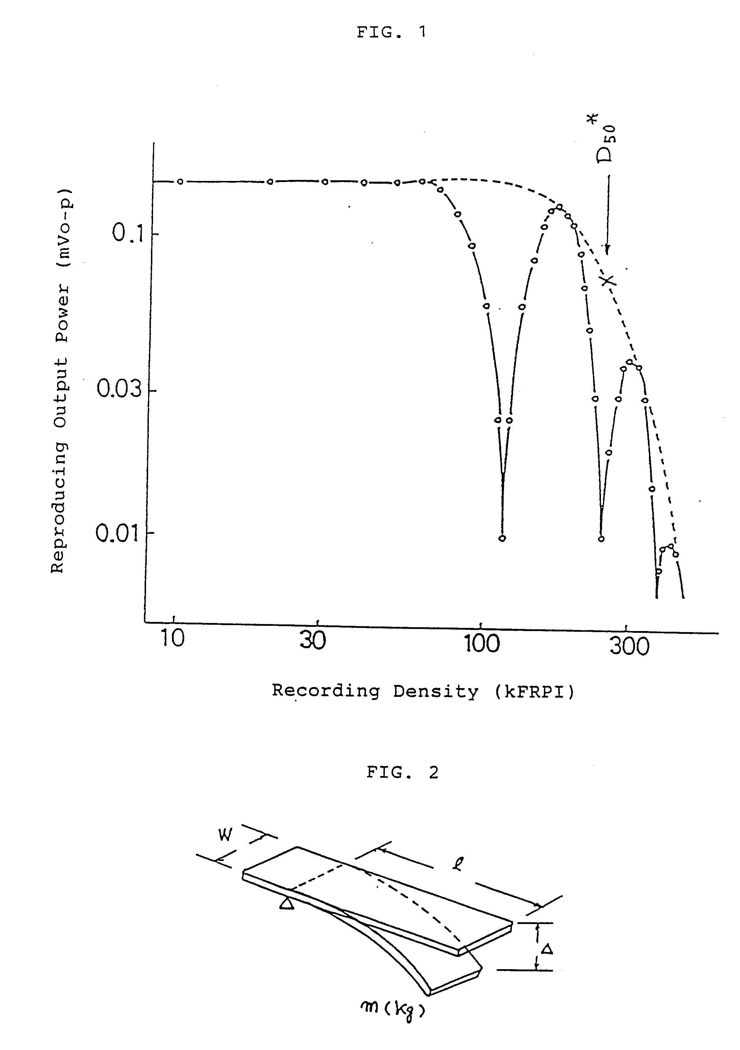

Next, a method of measurement of the stiffness of a medium will be explained hereunder. The stiffness can be obtained from the amount of deformation of a so-called cantilever. Fig. 2 shows the principle of the measurement. A part of a medium to be tested is cut to the form of a strip as shown in the drawing. One side of the strip is fixed also as shown in the drawing and the displacement ( Δmm) as hung by the self-weight is measured. The stiffness (S kgf • mm) can be obtained from the following formula:

$$S = m \bullet l^3/(8 \bullet W \bullet \Delta)$$

in which W means the width of the test strip as a unit of (mm); $l$ means the length of the test strip as a unit of (mm); and m means the weight of the strip having the width W and the length $l$, as a unit of (kg). $l$ is required to be so selected that the value Δ may be several mm. If the stiffness exceeds $20 \times 10^{-3}$ kgf• mm, the spacing between the head and the medium is to be large. The smaller the stiffness is, the smaller the spacing is. However, if the stiffness is smaller than $5 \times 10^{-3}$ kgf• mm, stable rotation could not be attained and the spacing would rather become large. Accordingly, a more preferred range for the stiffness is from $10 \times 10^{-3}$ to $17 \times 10^{-3}$ kgf• mm.

The stiffness of the medium is determined in accordance with the constitution of the medium as well as the tensile modulus and the thickness of the respective layers to constitute the medium. For example, in the case of a medium having a magnetic layer which comprises a Co-Cr alloy perpendicular magnetic anisotropic film (about 0.2 μm) and a soft magnetic layer (about 0.5 μm), as coated on the both surfaces of a base film, the said metallic layers have a tensile modulus of about 12000 kgf/mm² or so. Accordingly, in order to obtain the medium having the stiffness as defined in the present invention, if the base film has a tensile modulus of from 300 to 400 kgf/mm² or so, the thickness of the film is required to be from 30 to 60 μm, preferably about 50 μm or so; and if the film has tensile modulus of from 700 to 800 kgf/mm² or so, the thickness thereof is to be from 30 to 50 μm, preferably about 40 μm or so.

3

As another embodiment, in the case of a medium having a magnetic layer which comprises only a Co-Cr alloy magnetic anisotropic film (about 0.2 μm), as coated on one surface of a base film, the said metlalic layer has a tensile modulus of about 12000 kgf/mm² or so. Accordingly, in order to obtain the medium having the stiffness as defined in the present invention, if the base film has a tensile modulus of from 300 to 400 kgf/mm² or so, the thickness of the film is required to be from 45 to 80 μm or so, preferably from 60 to 75 μm or so; and if the film has a tensile modulus of form 700 to 800 kgf/mm² or so, the thickness thereof is to be from 40 to 60 μm or so, preferably from 50 to 60 μm or so.

As explained above, characterization of a perpendicular magnetic recording medium to have a surface flatness of 0.020 μ m or less, preferably 0.010 μm or less, as (Ra) and a stiffness of from $5 \times 10^{-3}$ to $20 \times 10^{-3}$ kgf• mm, preferably from $10 \times 10^{-3}$ to $17 \times 10^{-3}$ kgf• mm, can advantageously reduce the spacing between the medium and the head to 0.04 μm or less so that the contact therebetween can noticeably be ensured, and as a result, a high reproducing output can be attained even in the range of 100 kFRPl or more, for example, from 200 to 300 kFRPl.

The present invention will be explained in greater detail by the following examples and comparative examples, which, however, are not intended to limit the scope of the present invention.

EXAMPLES 1 to 5 AND COMPARATIVE EXAMPLES 1 to 4

Using three kinds of polyimide films each having different tensile modulus and (Ra), media were prepared with a sputter-up type high frequency sputtering device.

Specifically, the films used had a tensil modulus of 330 kgf/mm² or 800 kgf/mm², and the films having a tensile modulus of 330 kg/m² had a larger value than 0.020 μm for (Ra) or had a smaller value than 0.020 μm for (Ra). The respective films were stretched on a substrate holder of a high frequency sputtering device, whereupon the films were under tension in such a degree that those did not hang loose during sputtering. For the other samples than those of Examples 3 and 4, firstly, a Permalloy was deposited on the surface as a soft magnetic layer. As a target for the deposition, a Permalloy having a diameter of 6 inches and comprising 5 at.% of Cu, 4 at.% of Mo, 14 at.% of Fe and 77 at.% of Ni was used. At the state of the vacuum degree of $7 \times 10^{-7}$ Torr, argon gas was introduced into the device to make the vacuum degree of 5 mTorr therein, and sputtering was carried out under input power of 200 W until the formation of the layer with the necessary thickness. Afterwards, the substrate holder was cooled with water. For the samples of Examples 1 and 5 and Comparative Examples 2 to 4, the Permalloy layer was formed also on the other surface in the same manner. Next, for the samples of Examples 3 and 4, a Co-Cr alloy was deposited directly on the substrate film; and for the samples of the other Examples and Comparative Examples, the same was deposited on the soft magnetic film. For the deposition in every case, a 15 at.% Cr alloy target was used. An argon gas pressure was adjusted to be 2 mTorr and the substrate temperature was adjusted to be 120°C, and sputtering was carried out under input power of 400 W until the formation of the layer with the necessary thickness. For the samples of Examples 1, 3, 4 and 5 and Comparative Exampels 2 to 4, the Co-Cr alloy was deposited also on the other surface in the same manner.

The magnetic characteristics of the media thus prepared were as follows: For the soft magnetic layer, the saturation magnetization was about 650 emu/cc, the initial magnetic permeability in the direction of tracks was from 800 to 1200, and the coercive force was from about 0.5 to about 1 Oe; and for the Co-Cr layer in the part having no under layer Permalloy, the saturation magnetization was 500 emu/cc, the perpendicular coercive force was from 500 to 600 Oe, and the perperdicular anisotropic magnetic field was from 3.4 to 2.6 KOe.

Flexible discs each having a diameter of 5.25 inches were cut out from the respective sheets thus prepared, and the spacing between the head and the medium was measured using each disc. As the head was used a glassy dummy head having a radius of curvature of 30 mm. The head running speed was 2 m/sec. In addition, sample strips each having a width of 10 mm were cut out also from the flxible discs, and the stiffness thereof was measured.

The results obtained are shown in Table 1 below. In the case of the media having a stiffness of from $5 \times 10^{-3}$ to $20 \times 10^{-3}$ kgf• mm and a centerline average roughness of 0.020 μm or less, the spacing between the medium and the head was 0.040 μm or less. In addition, almost the same results with respect to the spacing were obtained even when the radius of curvature of the head used was varied within the range of from 15 to 30 mm.

Next, the recording and reproduction characteristics of the flexible discs obtained in Example 1 and Comparative Example 2 were examined.

4

As the head was used a main magnetic pole-exciting type perpendicular head. The radius of curvature of the head was 50 mm, the film thickness was 0.3 μm, the track width was 100 μm, and the number of coil winding was 50 turns. The track-running speed was 2 m/sec, and the same head was used for reproduction. The relation between the recording density and the reproducing output power for the sample of Example 1 is shown in Fig. 1. The recording current was 10 mA. Although the output power was periodically lost because of the loss based on the head film thickness, an envelope was drawn without regard for the loss as shown in Fig. 1, and the recording density at which the reproducing output power became a half of the output power in the low density region was defined to be $(D_{50^*})$.

In the sample of Example 1, $(D_{50^*})$ was 260 kFRPI, which means that the reproducing output power is high even in the high density range. On the other hand, in the sample of Comparative Example 2, $(D_{50^*})$ was 130 kFRPI.

In accordance with the present invention, the spacing between the head and the medium during running is minimized by specifically limiting the stiffness of the medium to fall within the scope of from $5 \times 10^{-3}$ to $20 \times 10^{-3}$ kgf• mm and the surface flatness thereof to be 0.020 μm or less as (Ra), as mentioned above, and as a result thereof, a flexible perpendicular magnetic disc having a high reproducing outpur power in a high density range of 100 kFRPI or more can be obtained.

## Table 1a

| | | Base Film | | | Magnetic Film | |
|---|---|---|---|---|---|---|
| | | Tensile Modulus $(kg/mm^2)$ | Thickness (μm) | ·Centerline Average Roughness (μm) | Perpendicular Magnetic Layer (μm) | Soft Magnetic Layer (μm) |
| Example | 1 | 330 | 50 | 0.011 | 0.19 | 0.50 |
| | 2 | 800 | 50 | 0.009 | 0.22 | 0.41 |
| | 3 | 800 | 50 | 0.009 | 0.20 | – |
| | 4 | 330 | 75 | 0.010 | 0.15 | – |
| | 5 | 330 | 50 | 0.019 | 0.20 | 0.49 |
| Comparative Example | 1 | 800 | 25 | 0.009 | 0.13 | 0.54 |
| | 2 | 800 | 50 | 0.009 | 0.26 | 0.55 |
| | 3 | 330 | 75 | 0.011 | 0.25 | 0.60 |
| | 4 | 330 | 50 | 0.031 | 0.18 | 0.51 |

## Table 1b

| | Medium | | | |
|---|---|---|---|---|
| | Side(s) Coated | Centerline Average Roughness ($\mu$m) | Stiffness ($\times 10^{-3}$ kgf$\cdot$mm) | Spacing ($\mu$m) |
| Example 1 | Both Sides | 0.005 | 11.3 | 0.021 |
| 2 | One Side | 0.008 | 14.6 | 0.033 |
| 3 | Both Sides | 0.008 | 11.3 | 0.028 |
| 4 | Both Sides | 0.006 | 16.7 | 0.030 |
| 5 | Both Sides | 0.015 | 11.0 | 0.035 |
| Comparative Example 1 | One Side | 0.008 | 2.1 | Failure in Rotation |
| 2 | Both Sides | 0.010 | 21.5 | 0.050 |
| 3 | Both Sides | 0.007 | 40.9 | 0.060 |
| 4 | Both Sides | 0.025 | 11.0 | 0.055 |

## Claims

1. A perpendicular magnetic recording medium having a centerline average roughness (Ra) of 0.020 $\mu$m or less and a stiffness of from $5 \times 10^{-3}$ to $20 \times 10^{-3}$ kgf$\cdot$ mm.

2. A perpendicular magnetic recording medium of Claim 1, which has a centerline average roughness (Ra) of 0.010 $\mu$m or less and a stiffness of from $10 \times 10^{-3}$ to $17 \times 10^{-3}$ kgf$\cdot$ mm.

3. A perpendicular magnetic medium of Claim 1 or 2, a base film for the medium is a polyimide film.

FIG. 1

FIG. 2

European Patent
Office

**EUROPEAN SEARCH REPORT**

Application number

| DOCUMENTS CONSIDERED TO BE RELEVANT | | | EP 88104746.8 |

<table>
<tr><th>Category</th><th>Citation of document with indication where appropriate,<br>of relevant passages</th><th>Relevant<br>to claim</th><th>CLASSIFICATION OF THE<br>APPLICATION (Int Cl 4)</th></tr>
<tr><td>A</td><td>PATENT ABSTRACTS OF JAPAN, unexa-<br>mined applications, P field, vol.<br>9, no. 157, July 2, 1985<br><br>THE PATENT OFFICE JAPANESE<br>GOVERNMENT<br>page 156 P 369<br><br>  * Kokai-no. 60-35 332 (NIPPON<br>    DENKI K.K.) *<br><br>    --</td><td>1-3</td><td>G 11 B 5/712<br>G 11 B 5/82<br>G 11 B 5/72</td></tr>
<tr><td>A</td><td>PATENT ABSTRACTS OF JAPAN, unexa-<br>mined applications, E section,<br>vol. 2, no. 121, October 12, 1978<br><br>THE PATENT OFFICE JAPANESE<br>GOVERNMENT<br>page 7122 E 78<br><br>  * Kokai-no. 53-87 703 (NIPPON<br>    DENKI K.K.) *<br><br>    --</td><td>1-3</td><td></td></tr>
<tr><td>A</td><td>PATENT ABSTRACTS OF JAPAN, unexa-<br>mined applications, P field, vol.<br>4, no. 134, September 19, 1980<br><br>THE PATENT OFFICE JAPANESE<br>GOVERNMENT<br>page 5 P 28<br><br>  * Kokai-no. 55-84 045 (NIPPON<br>    DENKI K.K.) *<br><br>    --</td><td>1-3</td><td>TECHNICAL FIELDS<br>SEARCHED (Int Cl 4)<br><br>G 11 B  5/00<br>C 08 G 73/00</td></tr>
</table>

The present search report has been drawn up for all claims

| Place of search | Date of completion of the search | Examiner |
|---|---|---|
| VIENNA | 24-06-1988 | BERGER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503 03 82

**European Patent Office**

## EUROPEAN SEARCH REPORT

Application number

| | DOCUMENTS CONSIDERED TO BE RELEVANT | | EP 88104746.8 |
|---|---|---|---|

| Category | Citation of document with indication, where appropriate, of relevant passages | Relevant to claim | CLASSIFICATION OF THE APPLICATION (Int Cl 4) |
|---|---|---|---|
| D,A | PATENT ABSTRACTS OF JAPAN, unexamined applications, C field, vol. 7, no. 232, October 14, 1983 THE PATENT OFFICE JAPANESE GOVERNMENT page 45 C 190 <br><br> * Kokai-no. 58-122 921 (KANEGAFUCHI KAGAKU KOGYO K.K.) * <br><br> ---- | 1-3 | |
| | | | **TECHNICAL FIELDS SEARCHED (Int Cl 4)** |

The present search report has been drawn up for all claims

| Place of search | Date of completion of the search | Examiner |
|---|---|---|
| VIENNA | 24-06-1988 | BERGER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82